# EUROPEAN PATENT SPECIFICATION

(11) **EP 3 086 071 B1**
(45) Date of publication and mention of the grant of the patent: **24.04.2019**
(21) Application number: 16159177.1
(22) Date of filing: 08.03.2016
(51) Int. Cl.: F28D 20/00, F28F 3/08

(54) **CHEMICAL HEAT STORAGE REACTOR AND CHEMICAL HEAT STORAGE SYSTEM**
CHEMISCHER WÄRMESPEICHERREAKTOR UND CHEMISCHE WÄRMESPEICHERANLAGE
RÉACTEUR DE STOCKAGE DE CHALEUR CHIMIQUE ET SYSTÈME DE STOCKAGE DE CHALEUR CHIMIQUE

(30) Priority: 18.03.2015 JP 2015055112
(43) Date of publication of application: 26.10.2016
(73) Proprietor: KABUSHIKI KAISHA TOYOTA CHUO KENKYUSHO, Nagakute-shi, Aichi-ken 480-1192 (JP)
(72) Inventor: MOCHIZUKI, Miyo, Aichi-ken, Aichi 480-1192 (JP); SHIMAZU, Takashi, Aichi-ken, Aichi 480-1192 (JP)
(74) Representative: Kramer Barske Schmidtchen Patentanwälte PartG mbB

(56) References cited:
- EP-A2- 2 749 831
- US-A1- 2005 064 268

## Description

### Technical Field

The present invention relates to a chemical heat storage reactor and a chemical heat storage system.

### Related Art

A stacked body described in Japanese Patent Application Laid-Open (JP-A) No. 2014-126293 is configured including a heat storage material reaction section and a heat exchange section stacked on the heat storage material reaction section. The stacked body is clamped between a pair of end plates in the stacking direction. Each of the end plates is formed in a rectangular shape, and respective through holes are formed in the four corners of each end plate. Bolts are inserted through the through holes formed in one end plate and the through holes formed in the other end plate, and nuts are fastened to leading end portions of the bolts, generating a restraining force in the stacked body clamped between the pair of end plates.

EP 2 749 831 A2 relates to a chemical heat storage reactor according to the preamble of claim 1.

US 2005/064268 A1 relates to a fastening mechanism of a fuel cell comprising an accumulation of membrane-electrode assemblies and separators alternately disposed therein, the fastening mechanism comprising a pair of end plates for supporting the fuel cell stack by respectively being mounted to both ends of the fuel cell stack, and a plurality of fastening bands elongated in an accumulation direction of the fuel cell stack for pressurizing the end plate by a predetermined pressure.

### SUMMARY OF INVENTION

### Technical Problem

The four corners of the one end plate and the four corners of the other end plate are coupled together by the bolts and nuts, such that restraining force acts on the stacked body. Accordingly, the restraining force arising at a central side portion of the stacked body is smaller than the restraining force arising at the four corner portions of the stacked body. Accordingly, localized deformation of the stacked body (stacked unit) sometimes occurs when heat storage material molded bodies provided in the heat storage material reaction sections have expanded.

An object of the present invention is to suppress localized deformation of a stacked unit when a heat storage material molded body has expanded.

### Solution to Problem

A chemical heat storage reactor according to a first aspect has the features according to claim 1.

According to the configuration of claim 1, the first restraint member surrounds the upper face, the lower face, and the pair of first side faces from the outside to restrain the stacked unit. The second restraint member surrounds the upper face, the lower face, and the pair of second side faces from the outside to restrain the stacked unit. Furthermore, according to the above configuration, the heat storage material layer, the heat storage material restraining layer, and the reaction medium dispersion layer are overlapped with each other in an un-joined state. However, employing the first restraint member and the second restraint member enables the respective layers to be suppressed from slipping in a direction intersecting with the stacking direction.

Accordingly, the six faces of the stacked unit are restrained by the first restraint member and the second restraint member. This thereby enables suppression of localized deformation of the stacked unit when the heat storage material molded body has expanded.

A chemical heat storage reactor according to a second aspect is the chemical heat storage reactor of the first aspect, wherein the first restraint member and the second restraint member at least partially overlap at a central side portion of the upper face and at a central side portion of the lower face.

According to the above configuration, the first restraint member and the second restraint member overlap at a central side portion of the upper face and at a central side portion of the lower face. Accordingly, even if a force to bulge locally acts on the central side portion of the upper face and on the central side portion of the lower face of the stacked unit, this force is resisted by the first restraint member and the second restraint member. Accordingly, local bulging of the central side portion of the upper face, and the central side portion of the lower face, of the stacked unit can be suppressed.

A chemical heat storage reactor according to a third aspect is the chemical heat storage reactor of either the first aspect or the second aspect, wherein an increase per unit temperature in a peripheral length of the first restraint member is the same as or smaller than an increase per unit temperature in a peripheral length of a portion of the stacked unit restrained by the first restraint member, and an increase per unit temperature of a peripheral length of the second restraint member is the same as or smaller than an increase per unit temperature in a peripheral length of a portion of the stacked unit restrained by the second restraint member.

According to the above configuration, as the heat storage material molded body bonds with the reaction medium and expands, the restraining force of the first restraint members with respect to the stacked unit, and the restraining force of the second restraint members with respect to the stacked unit, increase in strength.

A chemical heat storage reactor according to a fourth aspect is the chemical heat storage reactor of any one of the first aspect to the third aspect, wherein at least one of the first restraint member or the second restraint member is configured as a rectangular frame body following the respective faces of the stacked unit in a state prior to restraining the stacked unit.

According to the above configuration, the at least one of the first restraint member or the second restraint member is configured as a rectangular frame body following the respective faces of the stacked unit in a state prior to restraining the stacked unit. This thereby enables the stacked unit to be effectively restrained by aligning corner portions of the rectangular frame body with corner portions of the stacked unit.

A chemical heat storage system according to a fifth aspect includes: the chemical heat storage reactor of any one of the first aspect to the fifth aspect; and a medium vessel that is coupled to a vessel of the chemical heat storage reactor, and that performs at least one of supply of a reaction medium to inside the vessel, or receipt of a reaction medium from inside the vessel.

### Advantageous Effects of Invention

The chemical heat storage reactor of the present invention enables suppression of localized deformation of the stacked unit when the heat storage material molded body has expanded. This thereby enables the durability of the chemical heat storage system.

### BRIEF DESCRIPTION OF THE DRAWINGS

Fig. 1 is a perspective view illustrating a stacked unit provided to a chemical heat storage reactor according to an exemplary embodiment.
Fig. 2 is a perspective view illustrating a stacked unit provided to a chemical heat storage reactor according to the present exemplary embodiment.
Fig. 3 is a perspective view illustrating a stacked unit provided to a chemical heat storage reactor according to the present exemplary embodiment.
Fig. 4 is a partially exploded perspective view illustrating a stacked unit provided to a chemical heat storage reactor according to the present exemplary embodiment.
Fig. 5 is a partially exploded perspective view illustrating a stacked unit provided to a chemical heat storage reactor according to the present exemplary embodiment.
Fig. 6 is a side view illustrating a stacked unit provided to a chemical heat storage reactor according to the present exemplary embodiment.
Fig. 7 is an exploded perspective view illustrating a reaction unit provided to a chemical heat storage reactor according to the present exemplary embodiment.
Fig. 8A is an exploded perspective view illustrating a heat storage material layer provided to a chemical heat storage reactor according to the present exemplary embodiment.
Fig. 8B is a perspective view illustrating a heat storage material layer provided to a chemical heat storage reactor according to the present exemplary embodiment.
Fig. 9A is a perspective view illustrating a reaction medium dispersion layer provided to a chemical heat storage reactor according to the present exemplary embodiment.
Fig. 9B is a front view illustrating a reaction medium dispersion layer provided to a chemical heat storage reactor according to the present exemplary embodiment.
Fig. 10A is a perspective view illustrating a heat flow section provided to a chemical heat storage reactor according to the present exemplary embodiment.
Fig. 10B is a plan view illustrating a heat flow section provided to a chemical heat storage reactor according to the present exemplary embodiment.
Fig. 11 is a chart illustrating a relationship between temperature and equilibrium pressure using reaction equilibrium lines of heat storage material molded bodies employed in a reactor (chemical heat storage reactor) according to the present exemplary embodiment, and gas-liquid equilibrium lines of water.
Fig. 12 is a cross-section illustrating a reaction unit provided to a chemical heat storage reactor according to the present exemplary embodiment.
Fig. 13 is a partially exploded perspective view illustrating a chemical heat storage reactor according to the present exemplary embodiment.
Fig. 14 is a perspective view illustrating a chemical heat storage reactor according to the present exemplary embodiment.
Fig. 15A is a configuration diagram illustrating a chemical heat storage system according to the present exemplary embodiment.
Fig. 15B is a configuration diagram illustrating a chemical heat storage system according to the present exemplary embodiment.
Fig. 16 is a perspective view illustrating a stacked unit with a configuration for comparison to a stacked unit provided to a chemical heat storage reactor according to the present exemplary embodiment.

### DESCRIPTION OF EMBODIMENTS

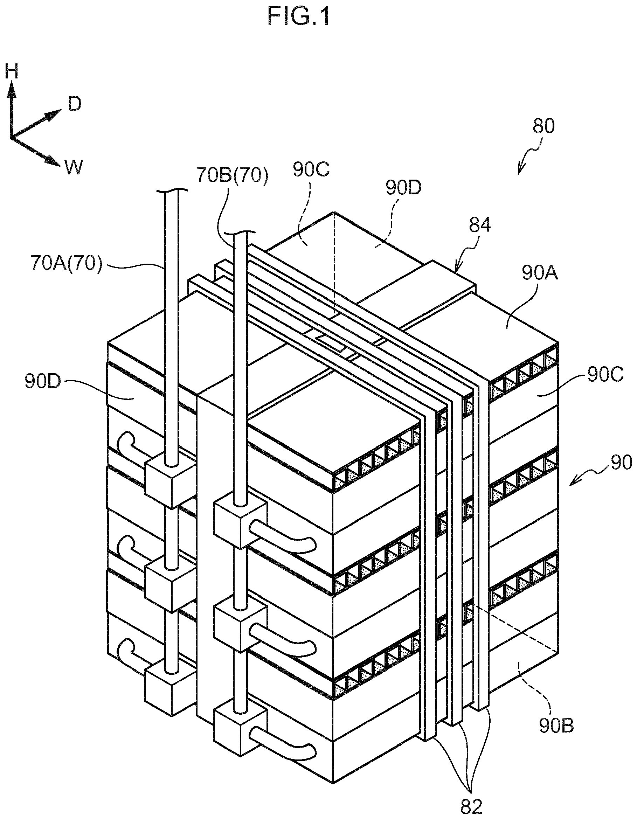

Explanation follows regarding an example of a chemical heat storage reactor and a chemical heat storage system according to an exemplary embodiment of the present invention, with reference to Fig. 1 to Fig. 16. In the drawings, the arrow H indicates a device up-down direction (vertical direction), the arrow W indicates a device width direction (horizontal direction), and the arrow D indicates a device depth direction (horizontal direction).

### Overall Configuration

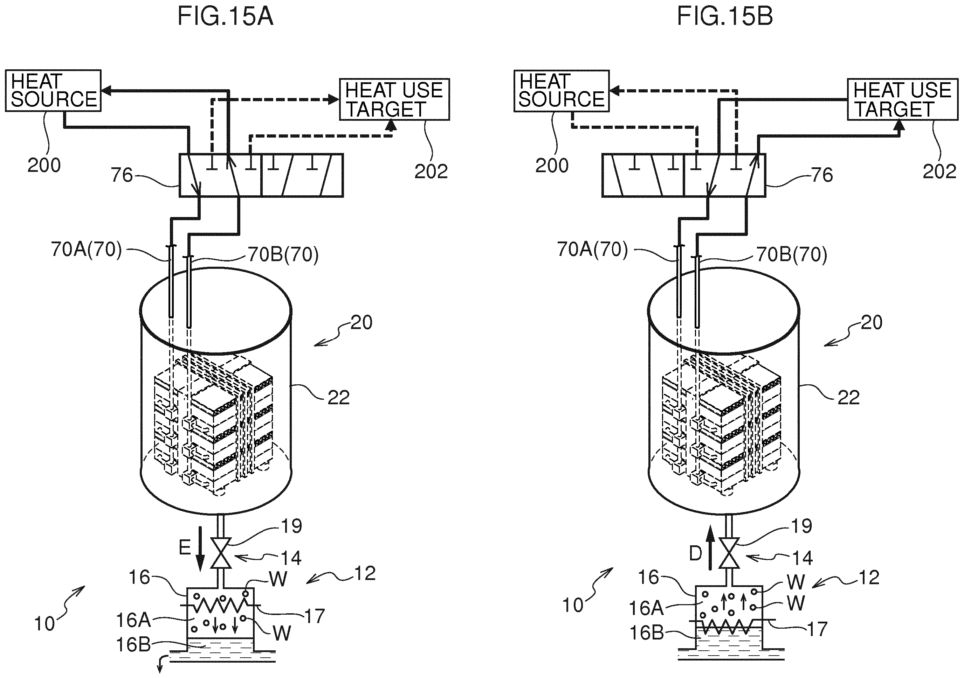

As illustrated in Fig. 15A and Fig. 15B, a chemical heat storage system 10 according to the present exemplary embodiment is configured including an evaporator and condenser 12, serving as an example of a medium vessel in which evaporation of water and condensation of water vapor (an example of a reaction medium) are performed, a reactor 20 serving as an example of a chemical heat storage reactor, and a communication path 14 that places the inside of the evaporator and condenser 12 in communication with the inside of the reactor 20.

### Evaporator and Condenser

The evaporator and condenser 12 respectively functions as an evaporation section that evaporates stored water and supplies the evaporated water to the reactor 20 (generates water vapor), as a condensation section that condenses water vapor received from the reactor 20, and as a storage section that stores water condensed from water vapor.

The evaporator and condenser 12 also includes a vessel 16, inside which water is stored. A coolant flow path 17 employed in the condensation of water vapor or the evaporation of water is provided inside the vessel 16. Low temperature medium flows through the coolant flow path 17 during condensation, and intermediate temperature medium flows through the coolant flow path 17 during evaporation.

The coolant flow path 17 is disposed such that heat exchange is performed in at least a portion of the vessel 16 that includes a gas phase portion 16A.

### Communication Path

The communication path 14 includes an opening and closing valve 19 that switches between communication and non-communication between the evaporator and condenser 12 (vessel 16) and the reactor 20 (reactor vessel 22, described later). Respective connection portions between the vessel 16, the reactor vessel 22, the communication path 14, and the opening and closing valve 19 are configured airtight, and air is removed from the space inside in advance to create a vacuum.

### Reactor

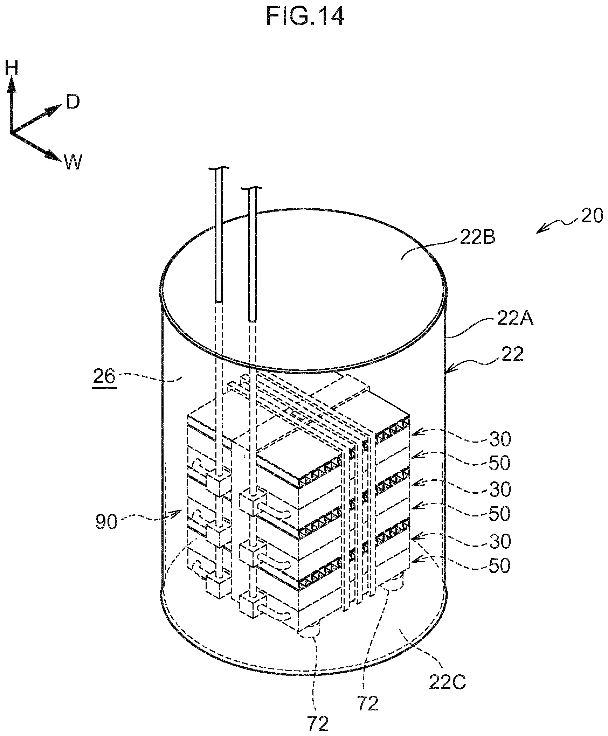

As illustrated in Fig. 14, the reactor 20 includes the reactor vessel 22, serving as an example of a vessel, heat storage material reaction sections 30 that are disposed inside the reactor vessel 22 and that generate heat and store heat, and heat flow sections 50, serving as an example of a heat exchange section, that are stacked together with the heat storage material reaction sections 30. Respective stacked bodies 60 are each configured including one heat storage material reaction section 30 and one heat flow section 50, and plural of the stacked bodies 60 are provided inside the reactor vessel 22.

### Reactor Vessel

The reactor vessel 22 is formed from stainless steel plates or the like, and includes a circular cylinder shaped main body portion 22A extending in the device up-down direction, a disk shaped upper lid member 22B that closes off an upper end of the main body portion 22A, and a disk shaped lower lid member 22C that closes off a lower end of the main body portion 22A. The main body portion 22A and the upper lid member 22B, and the main body portion 22A and the lower lid member 22C, are welded together so as to seal between the main body portion 22A and the upper lid member 22B, and between the main body portion 22A and the lower lid member 22C.

The inside of the reactor vessel 22 is thereby isolated from the outside of the reactor vessel 22, and air is removed from inside the reactor vessel 22 to create a vacuum. The inside of the reactor vessel 22 configures a reaction medium flow section 26 through which water vapor (an example of a reaction medium) flows.

### Heat Storage Material Reaction Section: Overall Configuration

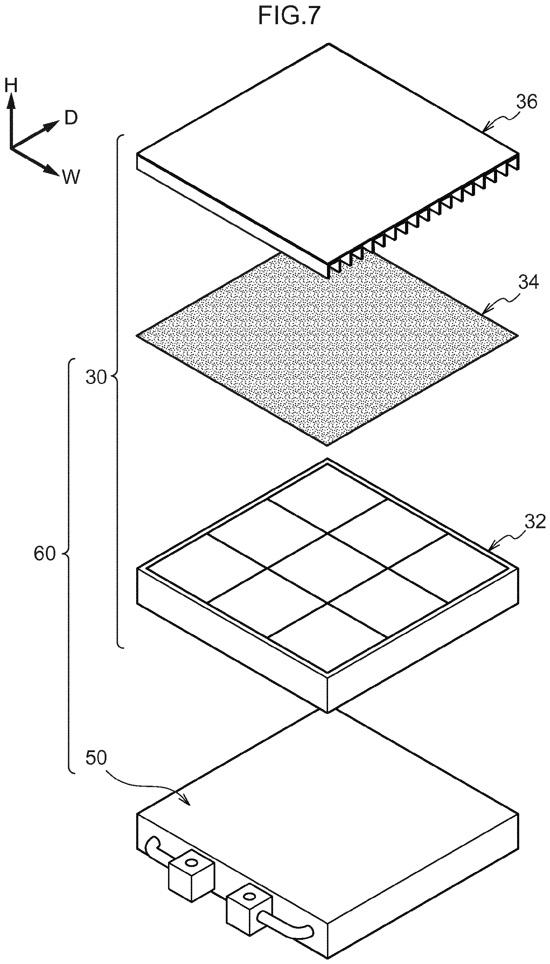

Each of the heat storage material reaction sections 30 is sealed inside the reactor vessel 22. As illustrated in Fig. 7, each of the heat storage material reaction sections 30 includes a heat storage material layer 32, a heat storage material restraining layer 34 stacked on the heat storage material layer 32 from the upper side, and a reaction medium dispersion layer 36 stacked on the heat storage material restraining layer 34 from the upper side.

The heat storage material layer 32, the heat storage material restraining layer 34, and the reaction medium dispersion layer 36 are formed in similar rectangular shapes as viewed along the device up-down direction, and are stacked in the device up-down direction in an un-joined state (a state that is not fixed by welding or the like) (referred to as a stacked structure).

### Heat Storage Material Reaction Section: Heat Storage Material Layer

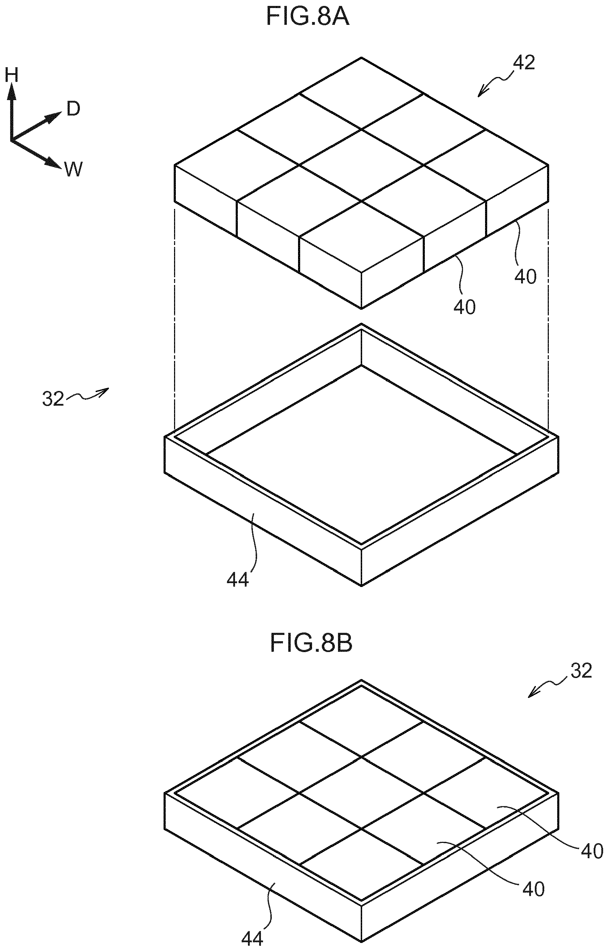

As illustrated in Fig. 8A and Fig. 8B, the heat storage material layer 32 includes a heat storage material unit 42 configured from plural heat storage material molded bodies 40 (nine in the present exemplary embodiment), and a frame shaped frame member 44 to which the heat storage material unit 42 is attached.

The thickness of the heat storage material molded bodies 40 is 30 mm, and the heat storage material molded bodies 40 are in square shapes with sides of 100 mm as viewed along the device up-down direction (the plate thickness direction).

The heat storage material molded bodies 40 employ, for example, molded bodies of calcium oxide (CaO: an example of a heat storage material) that is one example of an alkali earth metal oxide. The molded bodies are formed in substantially rectangular block shapes by, for example, kneading together and firing a calcium oxide powder and a binder (for example clay mineral).

Note that the heat storage material molded bodies 40 release heat (generate heat) accompanying hydration, and store heat (absorb heat) accompanying dehydration. The heat storage material molded bodies 40 are configured so as to be capable of reversibly repeating heat release and heat storage by the reaction shown below.

CaO + H₂O ↔ Ca (OH)₂

Combining a heat storage amount and heat generation amount Q with the above formula gives:

CaO + H₂O → Ca (OH)₂ + Q

Ca (OH)₂ + Q ← CaO + H₂O

Note that the heat storage capacity per 1kg of the heat storage material molded bodies 40 is for example 1.86 MJ/kg.

In the present exemplary embodiment, when the heat storage material is configured by a powder, the average particle diameter of the powder is taken as the particle diameter of the heat storage material configuring the heat storage material molded bodies 40, and when the heat storage material is in granular form, the average particle diameter of the powder prior to granulation is taken as the particle diameter of the powdered heat storage material configuring the heat storage material molded bodies 40. This is since it is assumed that were the particles to disintegrate, they would return to the state of an earlier process.

The frame member 44 is configured in a rectangular frame shape as viewed along the device up-down direction, and the heat storage material unit 42 is disposed inside the frame member 44. Movement of the heat storage material unit 42 in a horizontal direction (an orthogonal direction orthogonal to the plate thickness direction) is accordingly restricted by the frame member 44. A device up-down direction dimension (thickness dimension) of the frame member 44 is set such that the density of the heat storage material molded bodies 40 when they have expanded accompanying a hydration reaction reaches a predetermined set density of the heat storage material molded bodies 40.

### Heat Storage Material Reaction Section: Heat Storage Material Restraining Layer

As illustrated in Fig. 7, the heat storage material restraining layer 34 is sandwiched between the reaction medium dispersion layer 36 and the heat storage material layer 32, and is configured by an etching filter formed with multiple through holes of φ200 µm.

The heat storage material restraining layer 34 moreover has a filter rating smaller than the average particle diameter of the heat storage material configuring the heat storage material molded bodies 40 (see Fig. 8). The heat storage material restraining layer 34 therefore permits water vapor to pass through flow paths that are smaller than the average particle diameter of the heat storage material configuring the heat storage material molded bodies 40, while restricting the passage of heat storage material larger than the average particle diameter.

Note that the filter rating refers to particle diameters that give filtration efficiencies of 50% to 98%. Filtration efficiency is the removal efficiency with respect to particles of a given particle diameter.

### Heat Storage Material Reaction Section: Reaction Medium Dispersion Layer

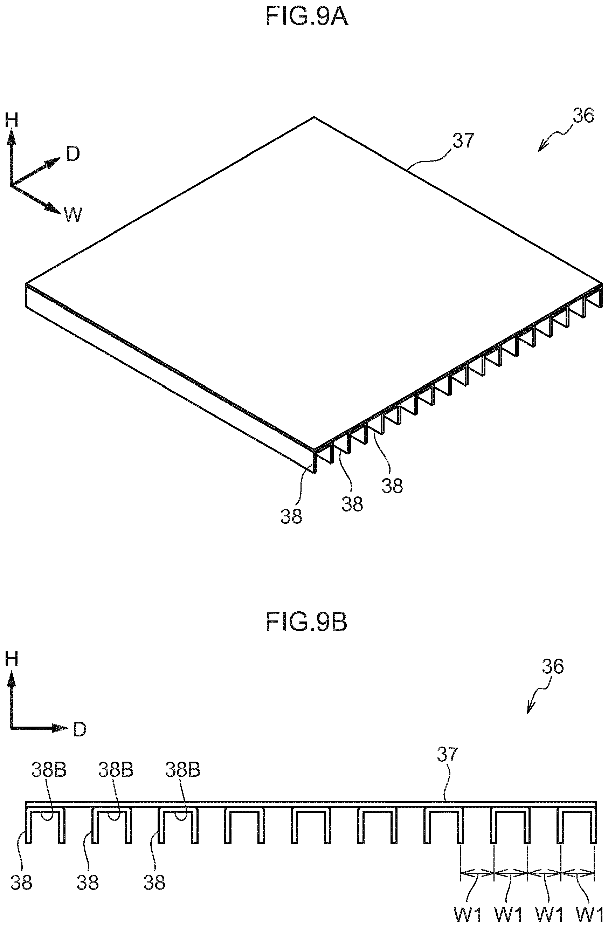

As illustrated in Fig. 9A, the reaction medium dispersion layer 36 includes a rectangular shaped top plate 37, and plural flow path members 38 that are fixed to the top plate 37. The flow path members 38 extend along the device width direction, in which the water vapor flows, and are disposed side-by-side at intervals in the device depth direction (see Fig. 9B).

As illustrated in Fig. 9B, each of the flow path members 38 is disposed at a lower side of the top plate 37, and is configured in a U-shape opening toward the side of the heat storage material restraining layer 34 (see Fig. 7) as viewed along the device width direction. An upper wall 38B of each flow path member 38 is welded to a lower face of the top plate 37.

Accordingly, water vapor supplied to the heat storage material layer 32, or water vapor discharged from the heat storage material layer 32, flows along the device width direction inside the flow path members 38, and between adjacent flow path members 38. In the present exemplary embodiment, the flow path width (labelled W1 in Fig. 9B) is set to 5 mm to 6 mm as an example.

### Heat Flow Section

As illustrated in Fig. 7, the heat flow section 50 is stacked at the lower side of the heat storage material reaction section 30.

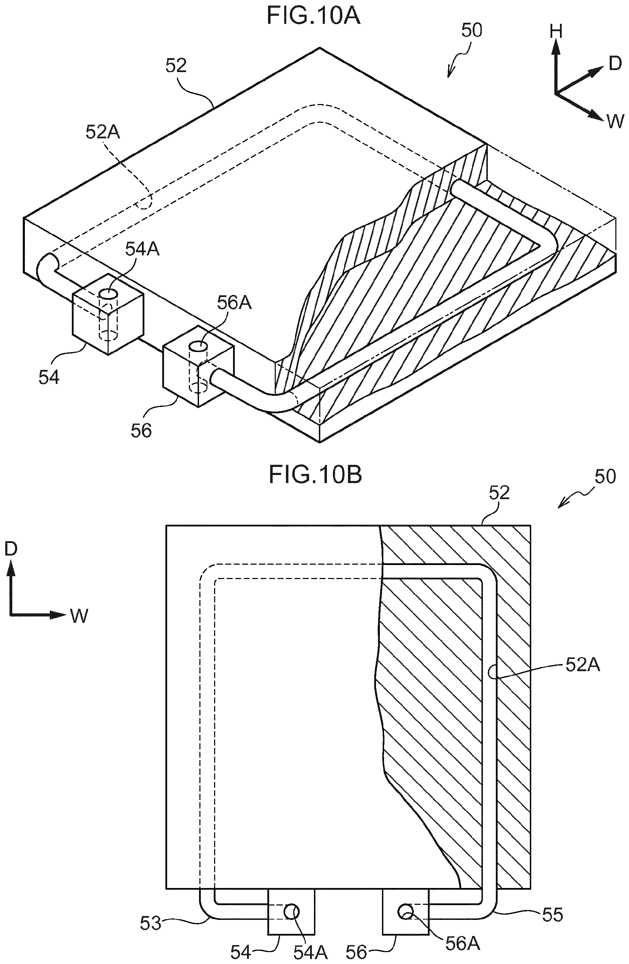

As illustrated in Fig. 10A and Fig. 10B, the heat flow section 50 includes a main body portion 52 that has a rectangular shape as viewed along the device up-down direction, and a pair of projection portions 54, 56 that project out from the main body portion 52 toward the device depth direction near side (the lower side in Fig. 10B) as viewed along the device up-down direction.

The pair of projection portions 54, 56 are disposed side-by-side in the device width direction, and each of the pair of projection portions 54, 56 is respectively formed with a through hole 54A, 56A penetrating along the device up-down direction. Inside the main body portion 52, a flow path 52A through which a heating medium flows is formed in a U-shape as viewed along the device up-down direction so as to follow side walls of the main body portion 52.

A conduit tube 53 is provided to place one end of the flow path 52A in communication with the through hole 54A of the projection portion 54, and a conduit tube 55 is provided to place the other end of the flow path 52A in communication with the through hole 56A of the projection portion 56. The flow path 52A is in communication with either a heat source 200 or a heat use target 202 (see Figs. 15), disposed outside the reactor vessel 22, through heating medium flow paths 70, described later.

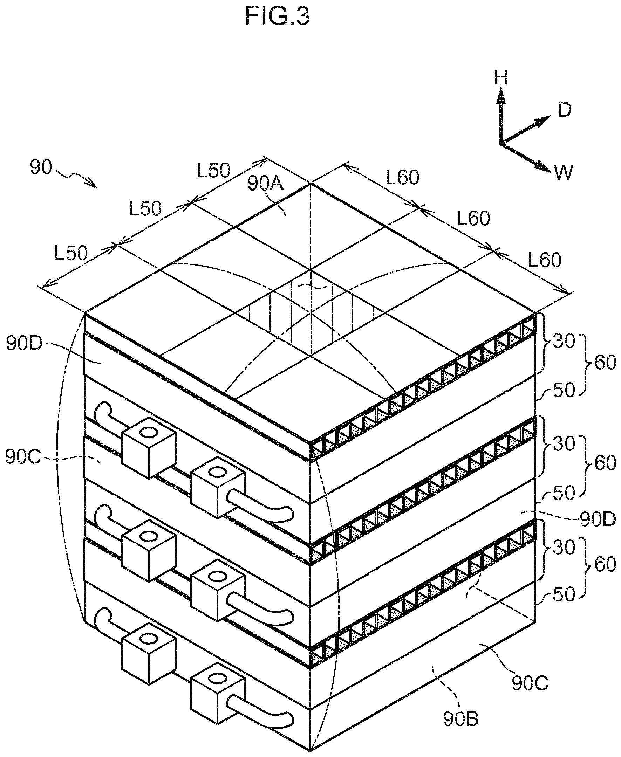

As illustrated in Fig. 3, three of the stacked bodies 60 are stacked along the stacking direction of the stacked bodies 60 (the device up-down direction in the present exemplary embodiment) inside the reactor 20. The three stacked bodies 60 configure a stacked unit 90. The reactor 20 is further provided with a restraint mechanism 80 that restrains the stacked unit 90.

### Restraint Mechanism

As illustrated in Fig. 1, the restraint mechanism 80 includes first restraint members 82 and a second restraint member 84 that restrain the stacked unit 90 from the outside. Detailed explanation regarding the first restraint members 82 and the second restraint member 84 will be given later.

### Heating Medium Flow Path

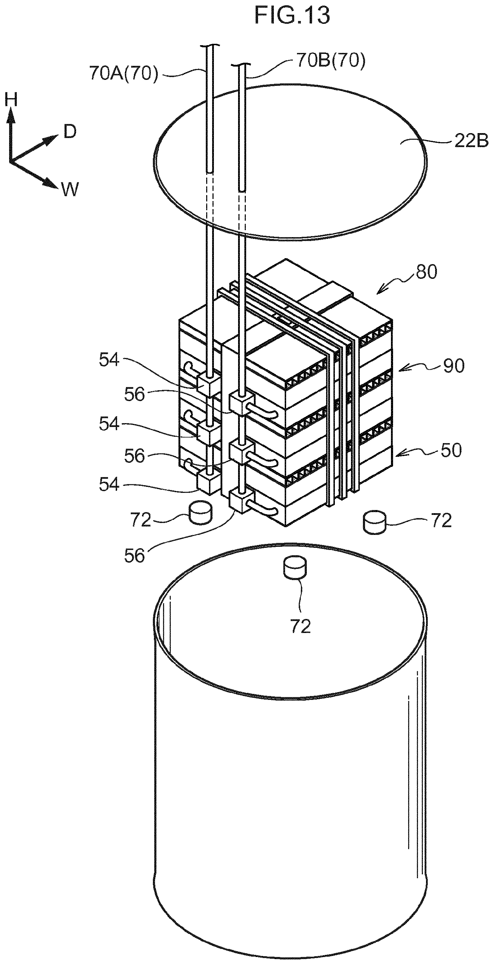

As illustrated in Fig. 13, the heating medium flow paths 70 are pipe shaped, and two of the heating medium flow paths 70 are provided extending along the device up-down direction so as to pass through the upper lid member 22B configuring the reactor vessel 22. One heating medium flow path 70A is employed to enable the heating medium to flow from outside the reactor vessel 22 to inside the reactor vessel 22, and the other heating medium flow path 70B is employed to enable the heating medium to flow from inside the reactor vessel 22 to outside the reactor vessel 22.

Through holes (not illustrated in the drawings) are formed in a peripheral face of the heating medium flow path 70A, and the heating medium flow path 70A is inserted through the through holes 54A formed in the projection portions 54 of the heat flow sections 50 (see Figs. 10). Similarly, through holes (not illustrated in the drawings) are formed in a peripheral face of the heating medium flow path 70B, and the heating medium flow path 70B is inserted through the through holes 56A formed in the projection portions 56 of the heat flow sections 50 (see Fig. 10). The heating medium flow paths 70 and the flow paths 52A (see Fig. 10) formed in the heat flow sections 50 are thereby placed in communication with each other.

### Other Members

As illustrated in Fig. 13 and Fig. 14, four circular column shaped support members 72 (of which only three are illustrated in Fig. 13, and of which only two are illustrated in Fig. 14) are provided to offer support from below to the stacked unit 90 that is restrained by the restraint mechanism 80 and in which the heating medium flow paths 70A, 70B are inserted through the through holes 54A, 56A. This configuration enables a thermal insulation effect to be obtained in the heat flow section 50 disposed on the lowermost side.

As illustrated in Figs. 15, portions of the heating medium flow paths 70 disposed outside the reaction vessel 22 are provided with a switching member 76 that switches the heating medium flow paths 70 between communication with the heat source 200 and communication with the heat use target 202.

### Chemical Heat Storage System Operation

Explanation follows regarding operation of the chemical heat storage system 10.

In the chemical heat storage system 10, in order to generate heat (release heat) stored in the reactor 20 from the heat storage material layers 32, as illustrated in Fig. 15B, the switching member 76 switches the heating medium flow paths 70 so as to be in communication with the heat use target 202. The opening and closing valve 19 is also opened, and in this state the intermediate temperature medium flows through the coolant flow path 17 of the evaporator and condenser 12, and water in a liquid phase portion 16B is evaporated. The generated water vapor moves in the arrow D direction inside the communication path 14, and is supplied inside the reaction vessel 22.

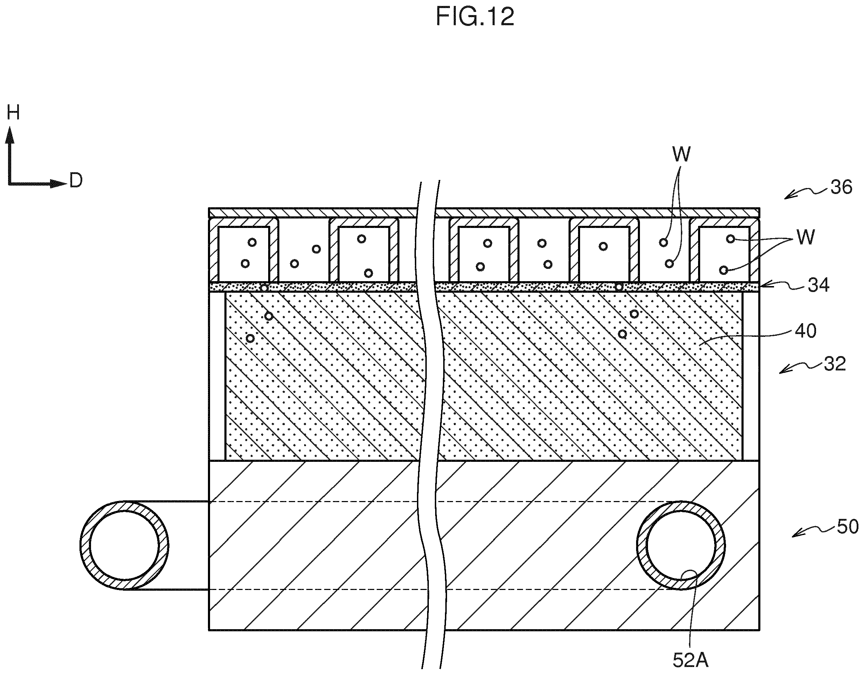

Next, the supplied water vapor passes through the reaction medium flow sections 26 inside the reaction vessel 22, flowing through the respective reaction medium dispersion layers 36 as illustrated in Fig. 12. Water vapor W passes through the respective heat storage material restraining layers 34 to contact the heat storage material layer 32, and the heat storage material molded bodies 40 of the heat storage material layer 32 generate heat (release heat) as a hydration reaction takes place. This heat is conveyed to the heat use target 202 by the heating medium flowing inside the flow paths 52A of the heat flow sections 50.

In order to store heat in the heat storage material molded bodies 40 of the heat storage material layers 32 in the chemical heat storage system 10, as illustrated in Fig. 15A, the switching member 76 switches the heating medium flow paths 70 so as to be in communication with the heat source 200. The opening and closing valve 19 is also opened, and in this state the heating medium that has been heated by the heat source 200 flows inside the flow paths 52A of the heat flow section 50 (see Fig. 12).

As illustrated in Fig. 12, the heat of the heating medium flowing inside the flow paths 52A causes a dehydration reaction to occur in the heat storage material molded bodies 40, thereby storing heat in the heat storage material molded bodies 40.

The water vapor W that has been separated from the heat storage material molded bodies 40 flows through the respective heat storage material restraining layers 34 to the reaction medium dispersion layer 36. The water vapor W that has flowed into the reaction medium dispersion layers 36 passes through the reaction medium flow section 26 and flows through the communication path 14 in the arrow E direction to flow inside the evaporator and condenser 12, as illustrated in Fig. 15A.

The water vapor is cooled by coolant flowing through the coolant flow path 17 in the gas phase portion 16A of the evaporator and condenser 12. The condensed water is stored in the liquid phase portion 16B of the vessel 16.

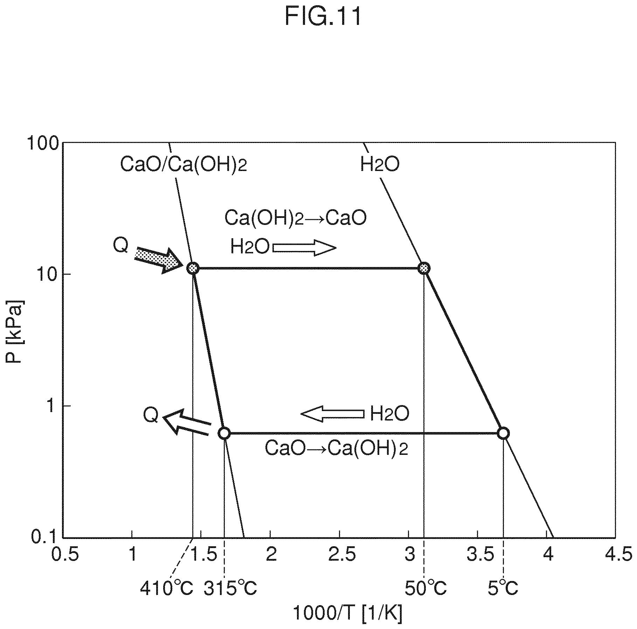

Supplementary explanation follows regarding heat storage and heat release in the heat storage material molded bodies 40 described above, with reference to (one example of) a cycle of the chemical heat storage system 10, illustrated in Fig. 11. Fig. 11 illustrates a cycle of the chemical heat storage system 10 about pressure equilibrium points represented by a PT graph. In this graph, the upper side line of equal pressure represents a dehydration (heat storage) reaction, and the lower side line of equal pressure represents a hydration (heat generation) reaction.

In this cycle, when for example heat is stored with the heat storage material molded bodies 40 at a temperature of 410 °C, the water vapor has a temperature equilibrium of 50 °C. Thus in the chemical heat storage system 10, the water vapor is cooled to 50 °C or below by heat exchange with the coolant in the coolant flow path 17 in the evaporator and condenser 12 (see Figs. 15), and condenses to become water.

When the intermediate temperature medium flows in the coolant flow path 17, water vapor is generated at a corresponding water vapor pressure. For example, it can be seen from the cycle illustrated in Fig. 11 that when water vapor is generated at 5 °C, the heat storage material molded bodies release heat at 315 °C. Accordingly, in the chemical heat storage system 10, from the inside of which air has been removed to create a vacuum, a high temperature of 315 °C can be obtained by pumping heat from a low temperature heat source in the region of 5 °C.

### Configuration of Relevant Portions

Next, explanation follows regarding the first restraint members 82 and the second restraint member 84 that restrain the stacked unit 90.

### First Restraint Members

Three of the first restraint members 82 are provided. As viewed along the device depth direction, the first restraint members 82 surround and restrain the stacked unit 90 from the outside (see Fig. 1). Namely, the first restraint members 82 surround the stacked unit 90 from the outside at an upper face 90A and a lower face 90B in the device up-down direction (stacking direction), and at a pair of first side faces 90C that face toward opposite sides from each other. In the present exemplary embodiment, as an example, each of the first restraint members 82 is formed from a stainless steel plate 2 mm thick, and has a width of 4 mm. The width of the first restraint members 82 is accordingly narrower than the width of a flow path (labeled W1 in Fig. 9B) of each of the flow path members 38.

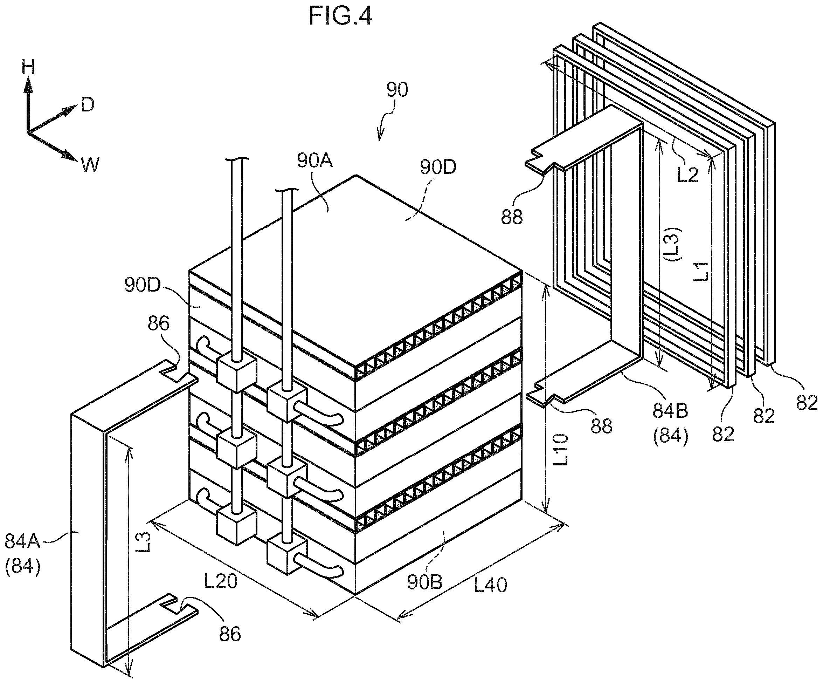

As illustrated in Fig. 4, prior to restraining the stacked unit 90, each of the first restraint members 82 is formed with a shape following the respective faces of the stacked unit 90. Namely, each first restraint member 82 is configured from portions facing the respective faces of the stacked unit 90, and is configured as a rectangular frame body.

A restraint length (L1 in Fig. 4) of each first restraint member 82 in the device up-down direction is set approximately 0.5 mm to 1.0 mm longer than the device up-down direction length (L10 in Fig. 4) of the stacked unit 90 in a state prior to water vapor supply. A restraint length (L2 in Fig. 4) of each first restraint member 82 in the device width direction is set to the same length as the device width direction length (L20 in Fig. 4) of the stacked unit 90 in a state prior to water vapor supply.

Accordingly, when the first restraint members 82 surround the stacked unit 90 from the outside in a state prior to water vapor supply, gaps are formed between the stacked unit 90 and the first restraint members 82 in the device up-down direction. The stacked unit 90 and the first restraint members 82 contact each other in the device width direction.

The increase per unit temperature in the peripheral length of each first restraint member 82 is the same as, or smaller than, the increase per unit temperature in the peripheral length of the portion of the stacked unit 90 restrained by the first restraint member 82. Namely, the material properties of the members configuring each section are determined so as to achieve this relationship.

For example, the first restraint members 82 and the second restraint member 84 described later are formed from stainless steel plates. The reaction medium dispersion layers 36 are formed from stainless steel plates. The frame members 44 of the heat storage material units 42 are formed from stainless steel plates. The main body portions 52 of the heat flow sections 50 are formed from stainless steel plates.

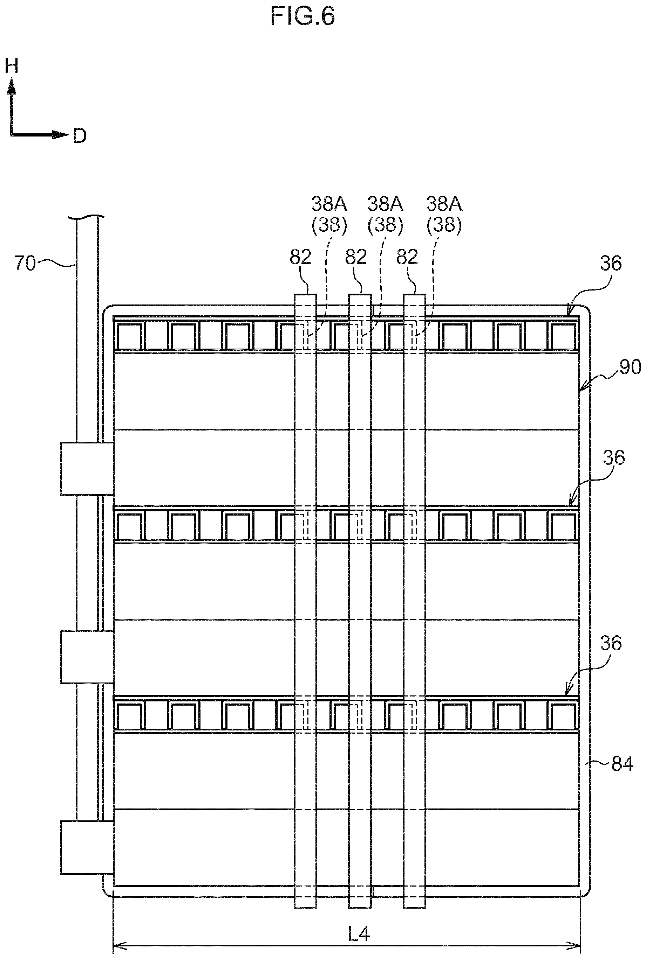

In a state in which the first restraint members 82 are restraining the stacked unit 90, as illustrated in Fig. 6, the first restraint members 82 are disposed so as to straddle vertical plates 38A of the flow path members 38 of the reaction medium dispersion layers 36.

### Second Restraint Member

As viewed along the device width direction, the second restraint member 84 surrounds and restrains the stacked unit 90 from the outside (see Fig. 1). Namely, the second restraint member 84 surrounds the stacked unit 90 from the outside at the upper face 90A, the lower face 90B, and a pair of second side faces 90D that face toward opposite sides from each other and intersect with the first side faces 90C. In the present exemplary embodiment, as an example, the second restraint member 84 is formed from a stainless steel plate 2 mm thick, and has a width of 12 mm.

As illustrated in Fig. 4, the second restraint member 84 is divided in the device depth direction in a state prior to restraining the stacked unit 90. Specifically, the second restraint member 84 is divided into a divided member 84A on the near side in the device depth direction (the left side in Fig. 4) and a divided member 84B on the far side in the device depth direction (the right side in Fig. 4).

As viewed along the device width direction, each of the divided members 84A, 84B has a shape opening toward the side of the other.

Portions at both end sides of the divided member 84A are formed with respective trapezoidal grooves 86 opening onto a short edge. Portions at both end sides of the divided member 84B are formed with respective trapezoidal projections 88 that engage with the respective grooves 86. The respective grooves 86 of the divided member 84A accordingly engage with the respective projections 88 of the divided member 84B to give the second restraint member 84 a shape following the respective faces of the stacked unit 90. Namely, the second restraint member 84, in which the grooves 86 of the divided member 84A are engaged with the projections 88 of the divided member 84B, is configured from portions facing the respective faces of the stacked unit 90, and is configured as a rectangular frame body.

A device up-down direction restraint length (L3 in Fig. 4) of the second restraint member 84 that configures a frame body is set approximately 0.5 mm to 1.0 mm longer than the device up-down direction length (L10 in Fig. 4) of the stacked unit 90 in a state prior to water vapor supply. A restraint length (L4 in Fig. 6) of the frame body of the second restraint member 84 in the device depth direction is set to the same length as the device depth direction length (L40 in Fig. 4) of the stacked unit 90 in a state prior to water vapor supply.

Accordingly, when the second restraint member 84 is employed to surround the stacked unit 90 from the outside in a state prior to water vapor supply, gaps are formed between the stacked unit 90 and the second restraint member 84 in the device up-down direction. The stacked unit 90 and the second restraint member 84 contact each other in the device depth direction.

The increase per unit temperature in the peripheral length of the second restraint member 84 configuring a frame body is the same as, or smaller than, the increase per unit temperature in the peripheral length of a portion of the stacked unit 90 restrained by the second restraint member 84.

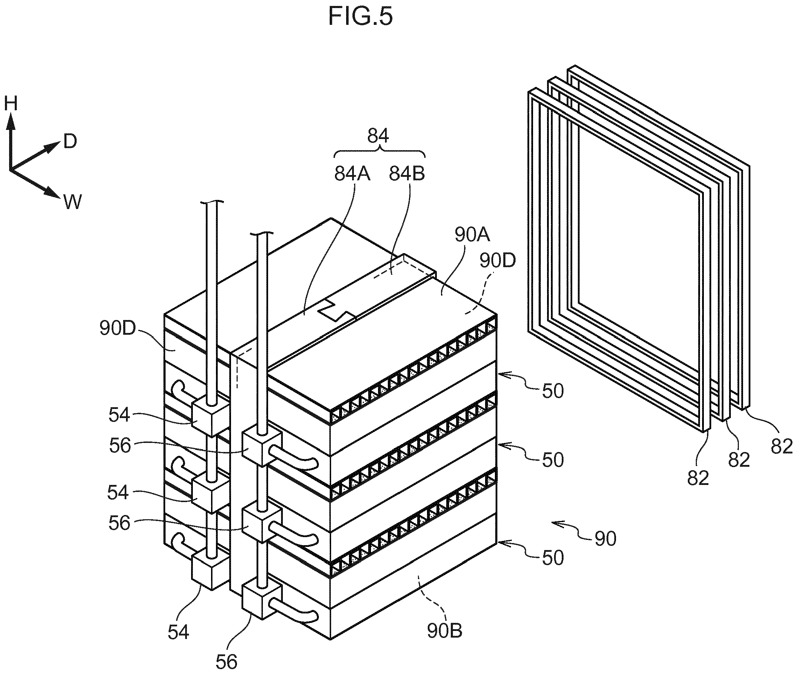

In a state in which the second restraint member 84 restrains the stacked unit 90, as illustrated in Fig. 5, the divided member 84A of the second restraint member 84 is disposed between the projection portions 54 and the projection portions 56 of the heat flow sections 50.

### Operation of Relevant Configurations

Explanation follows regarding operation of relevant configurations.

First, explanation follows regarding work performed by a technician (not illustrated in the drawings) to mount the first restraint members 82 and the second restraint member 84 to the stacked unit 90 in a state prior to water vapor supply.

As illustrated in Fig. 4 and Fig. 5, the technician brings the divided member 84A and the divided member 84B toward the stacked unit 90 along the device depth direction, and engages the respective grooves 86 of the divided member 84A with the respective projections 88 of the divided member 84B. The second restraint member 84 accordingly surrounds the upper face 90A, the lower face 90B, and the pair of second side faces 90D from the outside.

Then, as illustrated in Fig. 1 and Fig. 5, the technician brings the first restraint members 82 toward the stacked unit 90 along the device depth direction, and inserts the stacked unit 90 into the first restraint members 82. The first restraint members 82 accordingly surround the upper face 90A, the lower face 90B, and the pair of first side faces 90C from the outside.

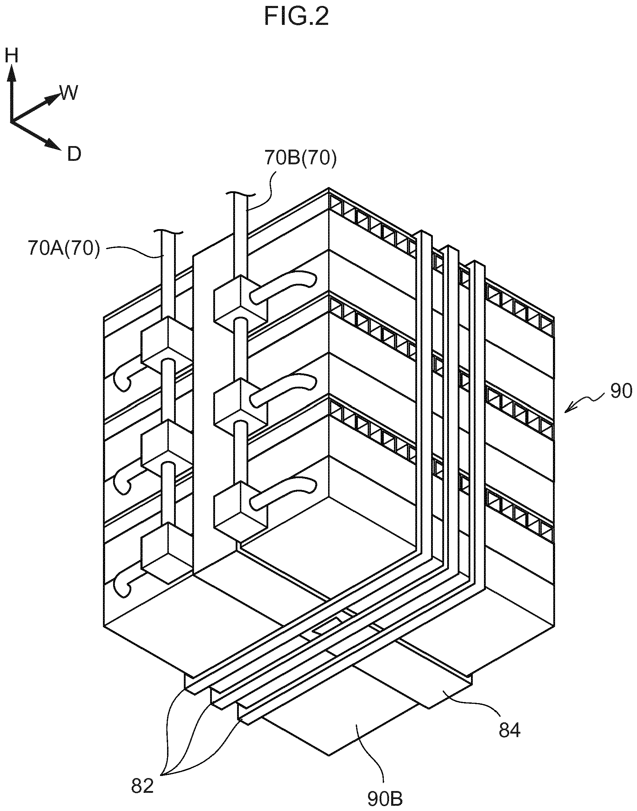

Then, in a state in which the stacked unit 90 is restrained by the first restraint members 82 and the second restraint member 84, the first restraint members 82 and the second restraint member 84 overlap each other at a central side portion of the upper face 90A of the stacked unit 90 and at a central side portion of the lower face 90B, as illustrated in Fig. 1 and Fig. 2.

The central side portions of the upper face 90A and the lower face 90B are portions at a central side of one edge and another edge of the upper face 90A and the lower face 90B (the portion indicated by oblique lines in Fig. 3) when the one edge and the other edge of the upper face 90A and the lower face 90B are divided into three equal segments.

Next, explanation follows regarding restraint of the stacked unit 90 by the first restraint members 82 and the second restraint member 84 when the heat storage material molded bodies 40 have expanded accompanying a hydration reaction, drawing comparisons with restraint of the stacked unit 90 using a restraint mechanism 100 according to a comparative example.

First, explanation follows regarding configuration of the restraint mechanism 100 according to the comparative example.

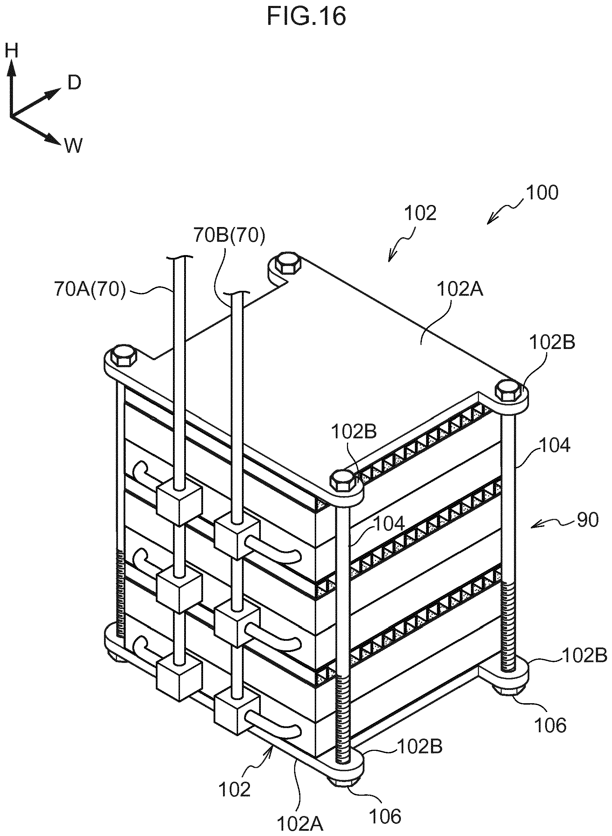

As illustrated in Fig. 16, the restraint mechanism 100 includes a pair of end plates 102 that clamp the stacked unit 90 in the device up-down direction, bolts 104, and nuts 106.

Each end plate 102 includes a main body portion 102A with a rectangular shape as viewed along the device up-down direction, and four projection portions 102B projecting out from the four corners of the main body portion 102A. The outer profile of the main body portion 102A is formed in a similar shape to the outer profile of the stacked unit 90. Each of the projection portions 102B is formed with a through hole (not illustrated in the drawings) penetrating in the device up-down direction.

The bolts 104 pass through the respective through holes formed in the projection portions 102B of the end plate 102 on the upper side, and leading end side portions of the bolts 104 pass through the respective through holes formed in the projection portions 102B of the end plate 102 on the lower side. Nuts are fastened to leading end portions of the bolts 104. The restraint mechanism 100 thereby restrains the stacked unit 90.

The stacked unit 90 is disposed inside the reactor vessel 22 (see Fig. 14) in a restrained state of the stacked unit 90 by the restraint mechanism 100. When the heat storage material molded bodies 40 (see Fig. 8) expand accompanying a hydration reaction, expansion force acts on a central side portion of the upper face 90A (see Fig. 3), and a central side portion of the lower face 90B, of the stacked unit 90 (see the double-dotted intermittent lines in Fig. 3). This is a result of the outer peripheries of the heat storage material molded bodies 40 being restrained by the frame members 44. In the device width direction and the device depth direction, the frame members 44 are pressed by the heat storage material molded bodies 40, such that an expansion force toward the outside acts in the device up-down direction on the central side portions of the stacked unit 90 (see the double-dotted intermittent lines in Fig. 3).

As a result, in the end plates 102, central side portions of the end plates 102 also rise up. This is since the pair of end plates 102 are coupled together at the four corners by the bolts 104 and the nuts 106. Accordingly, restraining force on the central side portions of the upper face 90A and the lower face 90B of the stacked unit 90 is weaker than restraining force on the four corner portions of the upper face 90A and the lower face 90B of the stacked unit 90.

The stacked unit 90 is moreover not restrained in the device width direction and the device depth direction, and so device up-down direction central side portions of the stacked unit 90 bulge out toward the outside.

In contrast, as illustrated in Fig. 1, the stacked unit 90 is disposed inside the reactor vessel 22 (see Fig. 14) in a state in which the stacked unit 90 is restrained by the first restraint members 82 and the second restraint member 84. When the heat storage material molded bodies 40 (see Fig. 8) expand accompanying a hydration reaction, as described above, the central side portion of the upper face 90A of the stacked unit 90 and the central side portion of the lower face 90B of the stacked unit 90 attempt to bulge out in the device up-down direction. The device up-down direction central side portions of the stacked unit 90 also attempt to bulge out toward the outside in the device width direction and in the device depth direction.

When this occurs, the gaps formed between the first restraint members 82 and the stacked unit 90, and the gaps formed between the second restraint member 84 and the stacked unit 90 in the device up-down direction disappear, and the first restraint members 82 and the second restraint member 84 contact the stacked unit 90. The stacked unit 90 is accordingly restrained by the first restraint members 82 and the second restraint member 84.

As described above, the increase per unit temperature in the peripheral length of the of the first restraint members 82 is the same as, or smaller than, the increase per unit temperature in the peripheral length of the portions of the stacked unit 90 restrained by the first restraint members 82. Moreover, the increase per unit temperature in the peripheral length of the second restraint member 84 configuring a frame body is the same as, or smaller than, the increase per unit temperature in the peripheral length of the portion of the stacked unit 90 restrained by the second restraint member 84. Accordingly, as the heat storage material molded bodies 40 (see Fig. 8) bond with water vapor and expand, the restraining force of the first restraint members 82 with respect to the stacked unit 90, and the restraining force of the second restraint member 84 with respect to the stacked unit 90, increase in strength.

### Summary

Note that as described above, the first restraint members 82 surround and restrain the stacked unit 90 from the outside at the upper face 90A, the lower face 90B, and the pair of first side faces 90C of the stacked unit 90. As described above, the second restraint member 84 surrounds and restrains the stacked unit 90 from the outside at the upper face 90A, the lower face 90B, and the pair of second side faces 90D of the stacked unit 90.

Accordingly, the six faces of the stacked unit 90 are restrained by the first restraint members 82 and the second restraint member 84. Employing the first restraint members 82 and the second restraint member 84 thereby enables local deformation of the stacked unit 90 to be better suppressed when the heat storage material molded bodies 40 have expanded than when employing the restraint mechanism 100 of the comparative example.

Due to restraining the six faces of the stacked unit 90, twisting of the stacked unit 90 when the heat storage material molded bodies 40 have expanded can be better suppressed than when employing the restraint mechanism 100 of the comparative example. This twisting refers to twisting about an axis in the device up-down direction.

Suppressing local deformation of the stacked unit 90 and twisting of the stacked unit 90 enables the heat storage material molded bodies 40 to be fully sealed.

Moreover, suppressing local deformation of the stacked unit 90 and twisting of the stacked unit 90 enables a reduction in heat exchange efficiency between the heat storage material reaction section 30 and the heat flow section 50 to be better suppressed than when employing the restraint mechanism 100 of the comparative example.

Due to employing the first restraint members 82 and the second restraint member 84, force of the stacked unit 90 attempting to bulge out can be converted into tension (peripheral direction restraint force) in the first restraint members 82 and the second restraint member 84. This thereby enables the first restraint members 82 and the second restraint member 84 to be made from thinner plates (enabling a reduction in weight).

When the first restraint members 82 are employed to surround the stacked unit 90 from the outside in a state prior to water vapor supply, gaps are formed between the stacked unit 90 and the first restraint members 82 in the device up-down direction. When the second restraint member 84 is employed to surround the stacked unit 90 from the outside in a state prior to water vapor supply, gaps are formed between the stacked unit 90 and the second restraint member 84 in the device up-down direction. This thereby enables the first restraint members 82 and the second restraint member 84 to be mounted to the stacked unit 90 easily.

The restraining force of the first restraint members 82 with respect to the stacked unit 90, and the restraining force of the second restraint member 84 with respect to the stacked unit 90, increase in strength as the heat storage material molded bodies 40 expand. This thereby enables the stacked unit 90 to be more effectively restrained by the first restraint members 82 and the second restraint member 84 than in cases in which the restraining force with respect to the stacked unit 90 becomes weaker as the heat storage material molded bodies 40 expand.

In the state in which the stacked unit 90 is restrained by the first restraint members 82 and the second restraint member 84, the first restraint members 82 and the second restraint member 84 overlap each other at the central side portion of the upper face 90A and at the central side portion of the lower face 90B of the stacked unit 90 (see Fig. 1 and Fig. 2). Accordingly, even if the central side portion of the upper face 90A and the central side portion of the lower face 90B of the stacked unit 90 attempt to bulge out, this force is resisted by the first restraint members 82 and the second restraint member 84. Local bulging of the central side portion of the upper face 90A and the central side portion of the lower face 90B of the stacked unit 90 can thereby be better suppressed than when employing the restraint mechanism 100 according to the comparative example.

In a state prior to restraining the stacked unit 90, the first restraint members 82 are configured as a rectangular shaped frame bodies following the respective faces of the stacked unit 90. In a restrained state of the stacked unit 90 by the first restraint members 82, the stacked unit 90 can be effectively restrained by aligning corner portions of the first restraint members 82 with corner portions of the stacked unit 90.

The heat storage material layer 32, the heat storage material restraining layer 34, and the reaction medium dispersion layer 36 configuring each heat storage material reaction section 30 are stacked in an un-joined state. This thereby enables independent management (replacement and maintenance) of the respective layers. Moreover, employing the first restraint members 82 and the second restraint member 84 enables the respective layers to be suppressed from slipping in the device width direction and the device depth direction.

The width of each first restraint member 82 is set narrower than the flow path width of a single flow path of the reaction medium dispersion layer 36. Moreover, in a state in which the first restraint members 82 restrain the stacked unit 90, the first restraint members 82 are disposed so as to straddle the vertical plates 38A of the flow path members 38 of the reaction medium dispersion layers 36 (see Fig. 6). This thereby enables a specific flow path opening area from becoming too narrow in the reaction medium dispersion layers 36.

The chemical heat storage system 10 suppresses local deformation of the stacked unit 90 when the heat storage material molded bodies 40 have expanded. This thereby enables the durability of the chemical heat storage system 10 to be improved.

Note that detailed explanation has been given regarding a specific exemplary embodiment of the present invention; however, the present invention is not limited to this exemplary embodiment, and it would be obvious to a practitioner skilled in the art that various other exemplary embodiments may be implemented within the scope of the present invention. For example, in the exemplary embodiment described above, the stacked unit 90 is configured from three of the stacked bodies 60. However, configuration may be made with one, two, or four or more of the stacked bodies 60.

In the exemplary embodiment described above, the grooves 86 of the divided member 84A and the projections 88 of the divided member 84B engage with each other to configure the second restraint member 84. However, a pair of divided members may be welded together to configure the second restraint member.

Although not particularly described in the above exemplary embodiment, the heat storage material may employ an ammonia reaction system using alkali metal chlorides, alkali earth metal chlorides, alkali metal bromides, or alkali earth metal bromides, with ammonia employed as the reaction medium. In such a configuration, the internal pressure of the vessel attains a pressurized state.

Although not particularly described in the above exemplary embodiment, the heating medium for operation at high temperatures may employ a high temperature heating medium or an inorganic compound heating medium. Such a configuration enables heating efficiency to be increased.

Although not particularly described in the above exemplary embodiment, a porous absorbent material containing a zeolite, activated carbon, or mesoporous silica may be employed for the heat storage material.

## Claims

1. A chemical heat storage reactor (20) comprising:
a stacked unit (90) that includes a stacked body including a heat storage material reaction section (30) provided with a heat storage material molded body that bonds with a reaction medium to generate heat, or from which a reaction medium is separated to store heat, and a heat exchange section (50) stacked on the heat storage material reaction section (30) and performing at least one of heat supply to the heat storage material reaction section (30) or heat recovery from the heat storage material reaction section (30), the stacked unit (90) being formed in a stacking direction with an upper face (90A), a lower face (90B), a pair of first side faces (90C) facing toward opposite sides from each other, and a pair of second side faces (90D) facing toward opposite sides from each other and intersecting the first side faces (90C);
a first restraint member (82) that surrounds the upper face (90A), the lower face (90B), and the pair of first side faces (90C) from the outside to restrain the stacked unit (90); and
a second restraint member (84) that surrounds the upper face (90A), the lower face (90B), and the pair of second side faces (90D) from the outside to restrain the stacked unit (90),
wherein the heat storage material reaction section (30) includes:
a heat storage material layer (32) that is stacked on the heat exchange section (50) and that includes the heat storage material molded body;
a reaction medium dispersion layer (36) that is stacked on the heat storage material layer (32) on an opposite side of the heat storage material layer (32) from the heat exchange section (50), and in which the reaction medium supplied to the heat storage material layer (32) flows and in which the reaction medium discharged from the heat storage material layer (32) flows; and
a heat storage material restraining layer (34) that is sandwiched between the heat storage material layer (32) and the reaction medium dispersion layer (36), that limits movement of a heat storage material configuring the heat storage material molded body toward a reaction medium dispersion layer side, and that permits movement of the reaction medium between the reaction medium dispersion layer (36) and the heat storage material layer (32), wherein
the heat storage material layer (32), the heat storage material restraining layer (34), and the reaction medium dispersion layer (36) are stacked on each other in an un-joined state, and
**characterized in that** the reaction medium dispersion layer (36) includes a rectangular shaped top plate (37) and plural flow path members (38) that are fixed to the top plate (37) and extend along the device width direction and are disposed side-by-side at intervals in the device depth direction, and wherein each of the flow path members (38) is disposed at a lower side of the top plate (37), and is configured in a U-shape opening toward the side of the heat storage material restraining layer (34) as viewed a long the device width direction, and wherein the first restraint members (82) are disposed so as to straddle vertical plates (38A) of the flow path members (39) and the width of the first restraint members (82) is narrower than the width of a flow path of each of the flow path members (38).

2. The chemical heat storage reactor (20) of claim 1, wherein the first restraint member (82) and the second restraint member (84) at least partially overlap at a central side portion of the upper face (90A) and at a central side portion of the lower face (90B).

3. The chemical heat storage reactor (20) of either claim 1 or claim 2, wherein an increase per unit temperature in a peripheral length of the first restraint member (82) is the same as or smaller than an increase per unit temperature in a peripheral length of a portion of the stacked unit (90) restrained by the first restraint member (82), and an increase per unit temperature of a peripheral length of the second restraint member (84) is the same as or smaller than an increase per unit temperature in a peripheral length of a portion of the stacked unit (90) restrained by the second restraint member (84).

4. The chemical heat storage reactor (20) of any one of claims 1 to 3, wherein at least one of the first restraint member (82) or the second restraint member (84) is configured as a rectangular frame body following the respective faces of the stacked unit (90) in a state prior to restraining the stacked unit (90).

5. A chemical heat storage system (10) comprising: the chemical heat storage reactor (20) of any one of claims 1 to 4; and a medium vessel that is coupled to a vessel of the chemical heat storage reactor (20), and that performs at least one of supply of the reaction medium to inside the vessel, or receipt of the reaction medium from inside the vessel.

## Patentansprüche

1. Chemischer Wärmespeicherreaktor (20), umfassend:
eine gestapelte Einheit (90), die einen gestapelten Körper mit einem Wärmespeichermaterialreaktionsabschnitt (30), welcher mit einem aus Wärmespeichermaterial geformten Körper versehen ist, welcher sich mit einem Reaktionsmedium verbindet, um Wärme zu erzeugen, oder von welchem ein Reaktionsmedium abgetrennt wird, um Wärme zu speichern, und einem Wärmeaustauschabschnitt (50), der auf dem Wärmespeichermaterialreaktionsabschnitt (30) gestapelt ist, und zumindest einen Schritt ausgewählt aus einer Wärmezufuhr zu dem Wärmespeichermaterialreaktionsabschnitt (30) oder einer Wärmeaufnahme von dem Wärmespeichermaterialreaktionsabschnitt (30) ausführt, enthält, wobei die gestapelte Einheit (90) in einer Stapelrichtung mit einer Oberseite (90A), einer Unterseite (90B), einem Paar von ersten Seitenflächen (90C), die sich in Richtung gegenüberliegender Seiten voneinander gegenüberliegen, und einem Paar von zweiten Seitenflächen (90D), die sich in Richtung gegenüberliegender Seiten voneinander gegenüberliegen und die ersten Seitenflächen (90C) schneiden, ausgebildet ist;
ein erstes Beschränkungsglied (82), das die Oberseite (90A), die Unterseite (90B) und das Paar von ersten Seitenflächen (90C) von außen umgibt, um die gestapelte Einheit (90) zu beschränken; und
ein zweites Beschränkungsglied (84), das die Oberseite (90A), die Unterseite (90B) und das Paar von zweiten Seitenflächen (90D) von außen umgibt, um die gestapelte Einheit (90) zu beschränken,
wobei der Wärmespeichermaterialreaktionsabschnitt (30) enthält:
eine Wärmespeichermaterialschicht (32), die auf dem Wärmeaustauschabschnitt (50) gestapelt ist, und die den aus Wärmespeichermaterial geformten Körper enthält;
eine Reaktionsmediumdispersionsschicht (36), die auf der Wärmespeichermaterialschicht (32) auf einer gegenüberliegenden Seite der Wärmespeichermaterialschicht (32) von dem Wärmeaustauschabschnitt (50) gestapelt ist, und in der das Reaktionsmedium, das der Wärmespeichermaterialschicht (32) zugeführt wird, strömt, und in der das Reaktionsmedium, das von der Wärmespeichermaterialschicht (32) ausgetragen wird, strömt; und
einer Wärmespeichermaterialbeschränkungsschicht (34), die zwischen der Wärmespeichermaterialschicht (32) und der Reaktionsmediumdispersionsschicht (36) eingebettet ist, die eine Bewegung eines Wärmespeichermaterials, das den aus Wärmespeichermaterial geformten Körper bildet, in Richtung einer Seite der Reaktionsmediumdispersionsschicht begrenzt, und die eine Bewegung des Reaktionsmediums zwischen der Reaktionsmediumdispersionsschicht (36) und der Wärmespeichermaterialschicht (32) erlaubt, wobei
die Wärmespeichermaterialschicht (32), die Wärmespeichermaterialbeschränkungsschicht (34) und die Reaktionsmediumdispersionsschicht (36) aufeinander in einem unverbundenen Zustand gestapelt sind, und
**dadurch gekennzeichnet ist, dass** die Reaktionsmediumdispersionsschicht (36) eine rechteckig geformte obere Platte (37) und mehrere Strömungswegglieder (38), die an der oberen Platte (37) befestigt sind, und sich entlang der Vorrichtungsbreitenrichtung erstrecken und Seite an Seite in Abständen in der Vorrichtungstiefenrichtung angeordnet sind, enthält, und wobei jedes der Strömungswegglieder (38) an einer unteren Seite der oberen Platte (37) angeordnet ist, und in einer U-förmigen Öffnung in Richtung der Seite der Wärmespeichermaterialbeschränkungsschicht (34), entlang der Vorrichtungsbreitenrichtung betrachtet, ausgestaltet ist, und wobei die ersten Beschränkungsglieder (82) derart angeordnet sind, um vertikale Platten (38A) der Strömungswegglieder (39) zu überspannen, und die Breite der ersten Beschränkungsglieder (82) enger ist als die Breite eines Strömungswegs von jedem der Strömungswegglieder (38).

2. Chemischer Wärmespeicherreaktor (20) nach Anspruch 1, wobei das erste Beschränkungsglied (82) und das zweite Beschränkungsglied (84) sich zumindest teilweise an einem zentralen Seitenabschnitt der Oberseite (90A) und an einem zentralen Seitenabschnitt der Unterseite (90B) überlappen.

3. Chemischer Wärmespeicherreaktor (20) nach entweder Anspruch 1 oder Anspruch 2, wobei eine Zunahme pro Temperatureinheit in einer Umfangslänge des ersten Beschränkungsgliedes (82) gleich oder kleiner ist als eine Zunahme pro Temperatureinheit in einer Umfangslänge eines Abschnitts der gestapelten Einheit (90), die durch das erste Beschränkungsglied (82) beschränkt wird, und eine Zunahme pro Temperatureinheit einer Umfangslänge des zweiten Beschränkungsgliedes (84) gleich oder kleiner ist als eine Zunahme pro Temperatureinheit in einer Umfangslänge eines Abschnitts der gestapelten Einheit (90), die durch das zweite Beschränkungsglied (84) beschränkt wird.

4. Chemischer Wärmespeicherreaktor (20) nach einem der Ansprüche 1 bis 3, wobei zumindest eines von dem ersten Beschränkungsglied (82) oder dem zweiten Beschränkungsglied (84) als ein rechteckiger Rahmenkörper im Anschluss an die entsprechenden Seiten der gestapelten Einheit (90) in einem Zustand vor dem Beschränken der gestapelten Einheit (90) ausgestaltet ist.

5. Chemisches Wärmespeichersystem (10), umfassend: den chemischen Wärmespeicherreaktor (20) nach einem der Ansprüche 1 bis 4; und einen Mediumbehälter, der mit einem Behälter des chemischen Wärmespeicherreaktors (20) gekoppelt ist, und welcher zumindest eine Zufuhr des Reaktionsmediums zum Inneren des Behälters und/oder eine Aufnahme des Reaktionsmediums vom Inneren des Behälters ausführt.

## Revendications

1. Réacteur de stockage de chaleur chimique (20) comprenant :
une unité empilée (90) qui comprend un corps empilé comprenant une section de réaction de matériau de stockage de chaleur (30) munie d'un corps moulé de matériau de stockage de chaleur qui se lie avec un milieu réactionnel pour générer de la chaleur, ou depuis lequel un milieu réactionnel est séparé pour stocker de la chaleur, et une section d'échange de chaleur (50) empilée sur la section de réaction de matériau de stockage de chaleur (30) et effectuant au moins une alimentation de chaleur dans la section de réaction de matériau de stockage de chaleur (30) ou récupération de chaleur depuis la section de réaction de matériau de stockage de chaleur (30), l'unité empilée (90) étant formée dans une direction d'empilage avec une face supérieure (90A), une face inférieure (90B), une paire de premières faces latérales (90C) orientées vers des côtés opposés l'une de l'autre, et une paire de secondes faces latérales (90D) orientées vers des côtés opposés l'une de l'autre et coupant les premières faces latérales (90C) ;
un premier élément de retenue (82) qui entoure la face supérieure (90A), la face inférieure (90B) et la paire de premières faces latérales (90C) depuis l'extérieur pour retenir l'unité empilée (90) ; et
un second élément de retenue (84) qui entoure la face supérieure (90A), la face inférieure (90B) et la paire de secondes faces latérales (90D) depuis l'extérieur pour retenir l'unité empilée (90),
dans lequel la section de réaction de matériau de stockage de chaleur (30) comprend :
une couche de matériau de stockage de chaleur (32) qui est empilée sur la section d'échange de chaleur (50) et qui comprend le corps moulé en matériau de stockage de chaleur ;
une couche de dispersion de milieu réactionnel (36) qui est empilée sur la couche de matériau de stockage de chaleur (32) sur un côté opposé de la couche de matériau de stockage de chaleur (32) depuis la section d'échange de chaleur (50), et dans laquelle le milieu réactionnel fourni à la couche de matériau de stockage de chaleur (32) circule et dans laquelle le milieu réactionnel délivré de la couche de matériau de stockage de chaleur (32) circule ; et
une couche de retenue de matériau de stockage de chaleur (34) qui est intercalée entre la couche de matériau de stockage de chaleur (32) et la couche de dispersion du milieu réactionnel (36), qui limite le mouvement d'un matériau de stockage de chaleur configurant le corps moulé en matériau de stockage de chaleur vers un côté de couche de dispersion de milieu réactionnel, et qui permet le mouvement du milieu réactionnel entre la couche de dispersion de milieu réactionnel (36) et la couche de matériau de stockage de chaleur (32), où
la couche de matériau de stockage de chaleur (32), la couche de retenue de matériau de stockage de chaleur (34) et la couche de dispersion de milieu réactionnel (36) sont empilées les unes sur les autres dans un état non joint, et
**caractérisé en ce que** la couche de dispersion de milieu réactionnel (36) comprend une plaque supérieure de forme rectangulaire (37) et plusieurs éléments de trajet d'écoulement (38) qui sont fixés à la plaque supérieure (37) et s'étendent le long de la direction de largeur du dispositif et sont disposés côte à côte à intervalles dans la direction de profondeur du dispositif, et où chacun des éléments de trajet d'écoulement (38) est disposé à un côté inférieur de la plaque supérieure (37), et est configuré en forme de U s'ouvrant vers le côté de la couche de retenue de matériau de stockage de chaleur (34), vue dans la direction de largeur du dispositif, et dans lequel les premiers éléments de retenue (82) sont disposés de manière à chevaucher des plaques verticales (38A) des éléments de trajet d'écoulement (39) et la largeur des premiers éléments de retenue (82) est plus étroite que la largeur du trajet d'écoulement de chacun des éléments de trajet d'écoulement (38).

2. Réacteur de stockage de chaleur chimique (20) selon la revendication 1, dans lequel le premier élément de retenue (82) et le second élément de retenue (84) se chevauchant au moins partiellement sur une partie latérale centrale de la face supérieure (90A) et sur une partie latérale centrale de la face inférieure (90B).

3. Réacteur de stockage de chaleur chimique (20) selon la revendication 1 ou la revendication 2, dans lequel une augmentation par unité de température dans une longueur périphérique du premier élément de retenue (82) est égale ou inférieure à une augmentation par unité de température dans une longueur périphérique d'une partie de l'unité empilée (90) retenue par le premier élément de retenue (82), et une augmentation par unité de température d'une longueur périphérique du second élément de retenue (84) est égale ou inférieure à une augmentation par unité de température dans une longueur périphérique d'une partie de l'unité empilée (90) retenue par le second élément de retenue (84).

4. Réacteur de stockage de chaleur chimique (20) selon l'une quelconque des revendications 1 à 3, dans lequel au moins un élément parmi le premier élément de retenue (82) ou le second élément de retenue (84) est configuré comme un corps de cadre rectangulaire suivant les faces respectives de l'unité empilée (90) dans un état avant de retenir l'unité empilée (90).

5. Système de stockage de chaleur chimique (10) comprenant : le réacteur de stockage de chaleur chimique (20) selon l'une quelconque des revendications 1 à 4 ; et un récipient de milieu qui est couplé à un récipient du réacteur de stockage de chaleur chimique (20), et qui effectue au moins l'une des étapes parmi une alimentation du milieu réactionnel à l'intérieur du récipient, ou une réception du milieu réactionnel depuis l'intérieur du récipient.
